(19) Europäisches Patentamt
European Patent Office
Office européen des brevets

(11) Veröffentlichungsnummer: **0 267 385 B1**

# (12) EUROPÄISCHE PATENTSCHRIFT

(45) Veröffentlichungstag der Patentschrift: **09.10.91**

(51) Int. Cl.[5]: **C09B 45/16**, D06P 1/10

(21) Anmeldenummer: **87113033.2**

(22) Anmeldetag: **07.09.87**

Die Akte enthält technische Angaben, die nach dem Eingang der Anmeldung eingereicht wurden und die nicht in dieser Patentschrift enthalten sind.

## (54) Asymmetrische 1:2-Chromkomplexfarbstoffe.

(30) Priorität: **18.09.86 DE 3631751**

(43) Veröffentlichungstag der Anmeldung:
**18.05.88 Patentblatt 88/20**

(45) Bekanntmachung des Hinweises auf die Patenterteilung:
**09.10.91 Patentblatt 91/41**

(84) Benannte Vertragsstaaten:
**CH DE ES FR GB IT LI**

(56) Entgegenhaltungen:
**FR-A- 2 262 084**
**FR-A- 2 262 687**

(73) Patentinhaber: **BAYER AG**

**W-5090 Leverkusen 1 Bayerwerk(DE)**

(72) Erfinder: **Mennicke, Winfried, Dr.**
**Steglitzer Strasse 8**
**W-5090 Leverkusen 1(DE)**

EP 0 267 385 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind asymmetrische 1:2-Chromkomplexfarbstoffe der Formel

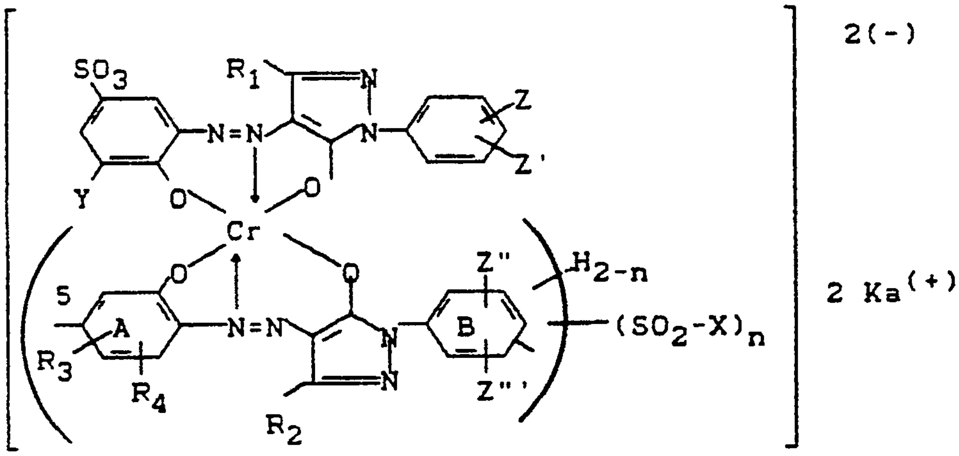

(I)

worin

| | |
|---|---|
| $H_{2-n}$ und $SO_2$-X | an Ring B oder Position 5 des Ringes A gebunden sind, und |
| $R_1$, $R_2$ | gegebenenfalls substituiertes Alkyl, gegebenenfalls substituiertes Aryl, COOH, gegebenenfalls durch Alkyl Aralkyl, Cycloalkyl oder Aryl mono- oder disubstituiertes Carbamoyl, CN oder Carbonsäureester, |
| X | gegebenenfalls durch Alkyl, Cycloalkyl, Aralkyl oder Aryl mono- oder disubstituiertes $NH_2$, Aryloxy oder Alkyl, |
| Y | $NO_2$ oder Cl, |
| Z | H, Cl oder gegebenenfalls substituiertes Alkyl, |
| Z' | Cl, gegebenenfalls substituiertes Alkyl, gegebenenfalls substituiertes Alkoxy, $NO_2$ oder gegebenenfalls durch Alkyl, Aryl, Cycloalkyl oder Aralkyl mono- oder disubstituiertes Carbamoyl, |
| Z'', Z''' | H, Cl oder gegebenenfalls substituiertes Alkyl, |
| n | 1 oder 2, |
| $Ka^{(+)}$ | ein Kation und |
| $R_3$, $R_4$ | H, $NO_2$, Cl, gegebenenfalls substituiertes Alkyl bedeutet, |

sowie die durch Mischchromierung der entsprechenden Ausgangsfarbstoffe erhältlichen Gemische.

Bevorzugte Alkyl- und Alkoxygruppen sind solche mit 1 - 4 C-Atomen, die gegebenenfalls weiter substituiert sein können, beispielsweise durch CN, Cl, OH, $C_1$-$C_4$-Alkoxy oder gegebenenfalls substituiertes Phenyl.

Besonders bevorzugt sind Methyl oder Methoxy.

Bevorzugte Cycloalkylgruppen sind Cyclohexyl oder Methylcyclohexyl, und als Aralkylgruppen kommen vorzugsweise Benzyl oder Phenethyl in Frage.

Bevorzugte Arylreste sind insbesondere gegebenenfalls substituierte Phenylreste mit Substituenten wie Cl, Br, $NO_2$, $C_1$-$C_4$-Alkyl oder $C_1$-$C_4$-Alkoxy.

Das durch das Symbol $Ka^{(+)}$ dargestellte Kation ist vorzugsweise ein Alkaliion, insbesondere ein Lithium-, Natrium- oder Kaliumion, ein Amoniumion oder das Kation eines organischen Amins, beispielsweise eines Mono-, Di-oder Tris-alkyl- oder -hydroxyalkylamins.

Bevorzugte Farbstoffe (I) sind solche der Formel

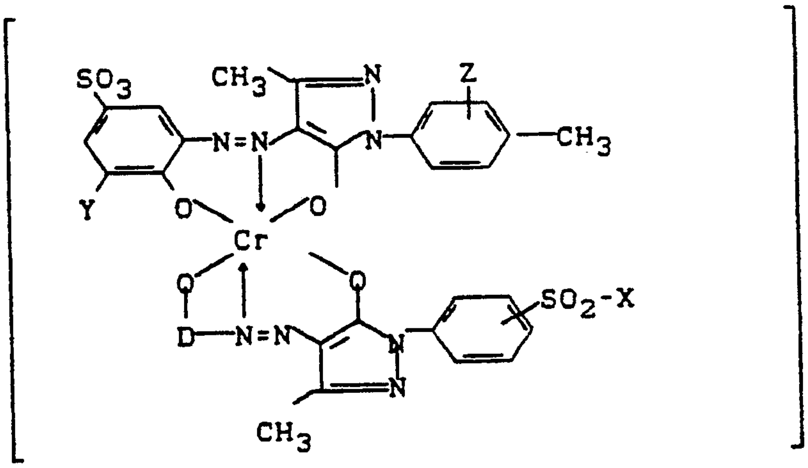

2(-)

(II)

2 Ka(+)

und

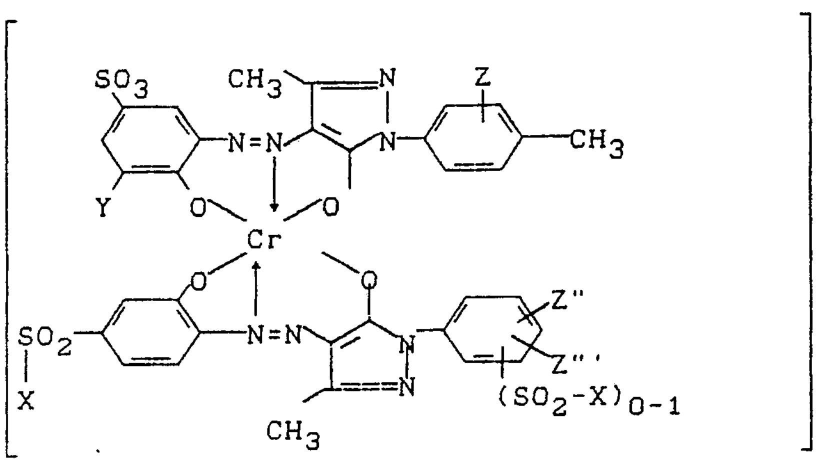

2(-)

(III)

2 Ka(+)

worin

D für den Rest des 4-Chlor-2-amino-1-hydroxybenzols, 4,6-Dichlor-2-amino-1-hydroxybenzols, 4-Chlor-6-nitro-2-amino-1-hydroxybenzols oder 5-Nitro-2-amino-1-hydroxybenzols steht.

Von besonderer Bedeutung sind Farbstoffe der Formel (II) und (III), bei denen X für $NR_4R_5$ steht, wobei

$R_4$ H oder Alkyl und

$R_5$ H, Alkyl oder Aryl bedeutet.

Zur Herstellung der erfindungsgemäßen 1:2-Chromkomplexfarbstoffen der Formel (I) wird ein Azofarbstoff der Formel

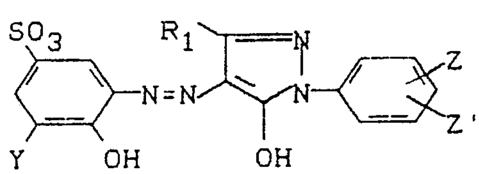

(IV)

oder

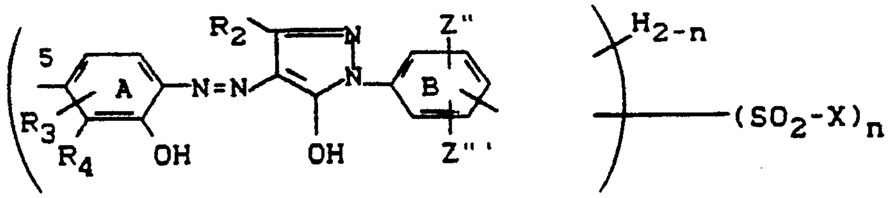

(V)

mit in an sich bekannter Weise einem chromabgebenden Mittel in den Chrom-1:1-Komplex überführt und dieser in Gegenwart von säurebindenden Mitteln mit dem entsprechenden nichtmetallisierten Farbstoff der Formel (V) bzw. (IV) umgesetzt. Chromhaltiger und chromfreier Farbstoff werden vorzugsweise in stöchiometrischen Mengen eingesetzt, wobei sich ein Überschuß des Chrom-1:1-Komplexes weniger nachteilig auswirkt als ein Überschuß an metallfreiem Farbstoff.

Eine weitere Möglichkeit zur Herstellung der erfindungsgemäßen Farbstoffe der Formel (I) besteht darin, in an sich ebenfalls bekannter Weise ein Gemisch von je einem Azofarbstoff der Formel (IV) oder (V) mit chromabgebenden Mitteln in Gegenwart von Säureacceptoren zu behandeln. Bei dieser sogenannten Mischchromierung braucht das Verhältnis der beiden Ausgangsfarbstoffe nicht stöchiometrisch zu sein, sondern kann in weiten Grenzen schwanken, beispielsweise von 70:30 bis 30:70, vorzugsweise in den Grenzen von 60:40 bis 40:60. Die Chromierung erfolgt bei Temperaturen von 80-145 °C, vorzugsweise bei 100 °C, und bei pH 4-10, vorzugsweise 6-8, und liefert neben den asymmetrischen 1:2-Chromkomplexen der Formel (I) als Nebenprodukte auch die beiden symmetrischen 1:2-Chromkomplexe der Formel (VI) und (VII).

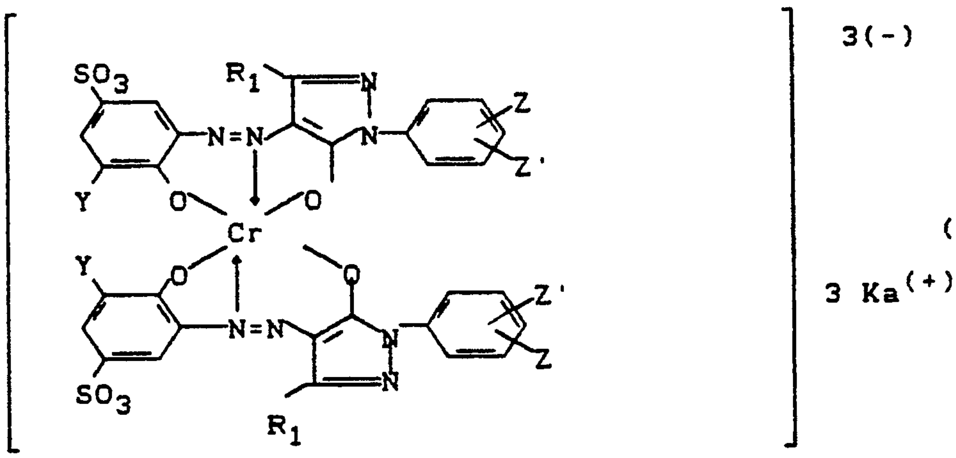

(VI)

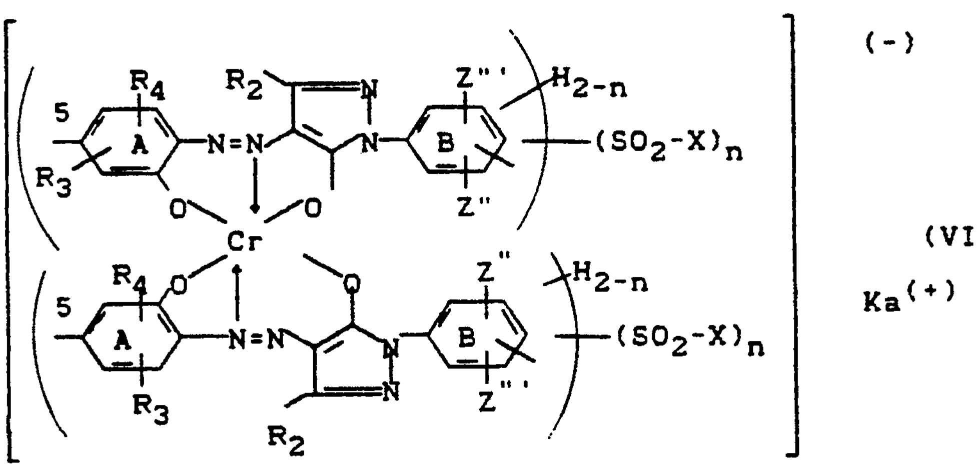

(VII)

Bei der Mischchromierung finden als chromabgebende Mittel hauptsächlich die Chromsalze von anorganischen oder organischen Säuren Verwendung, beispielsweise Chromchlorid, Chromacetat, Chromsalicylsäure, ferner auch Chromtrioxid und Natrium- oder Kaliumchromat bzw. -bichromat.

Geeignete Säureacceptoren, wie sie bei der Herstellung der 1:2-Chromkomplexe benötigt werden, sind beispielsweise Hydroxide oder Carbonate von Alkalimetallen, wie Lithium-, Natrium- oder Kaliumhydroxid oder -carbonat, Ammoniak oder organische Amine, wie Mono-, Di-, Triethylamin, Mono-, Di- oder Triethanolamin, oder Tetraalkylammoniumhydroxide, wie Tetramethylammoniumhydroxid. Vorzugsweise setzt man den Säureacceptor so zu, daß der 1:2-Chromkomplex bei einem konstanten pH gebildet wird.

Die Umsetzungen zu den 1:1-Chrom- und 1:2-Chromkomplexfarbstoffen können zur Beschleunigung der Reaktion auch in Gegenwart organischer Lösungsmittel durchgeführt werden. Geeignete organische Lösungsmittel sind beispielsweise niedere Alkohole, wie Ethanol, Ketone, wie Ethylmethylketon, Carbonamide, wie Formamid, N-Methylpyrrolidon, Glykole, wie Ethylenglykol, 1,2-Propylenglykol, oder vorzugsweise deren Mono-$C_1$-$C_4$-alkylether, wie Ethylglykol, 1-Ethoxy-2-propanol.

Von besonderer färberischer Bedeutung sind Gemische der erfindungsgemäßen Farbstoffe der Formel (I) mit ihren bei der Mischchromierung zwangsläufig als Nebenprodukte entstehenden symmetrischen 1:2-Chromkomplexfarbstoffen der Formel (VI) und (VII), die ebenfalls Gegenstand der Erfindung sind. Von derartigen Gemischen sind wiederum bevorzugt die Gemische aus den Farbstoffen der Formel (II) und insbesondere die Gemische aus den Farbstoffen der Formel (III) mit den jeweils beiden dazugehörigen symmetrischen Farbstoffen.

Die Azofarbstoffe der Formel (IV) werden in an sich bekannter Weise durch Kuppeln von diazotierten Aminen der Formel (VIII) auf Pyrazolone der Formel (IX) erhalten, diejenigen der Formel (V) durch Kuppeln von diazotierten Aminen der Formel (X) auf Pyrazolone der Formel (XI),

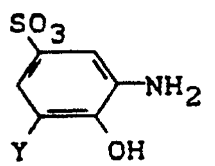

(VIII)

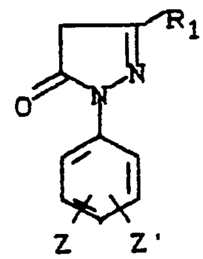

(IX)

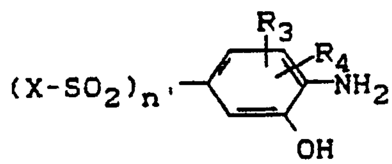

(X)

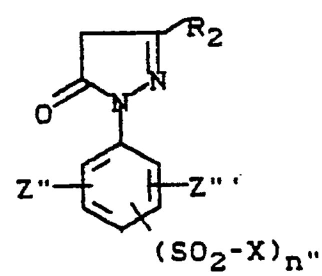

(XI)

wobei
n′ und n″ = 0 oder 1 und n′ + n″ = 1 oder 2.

Beispiele von Aminen der Formel (X) sind 2-Amino-1-hydroxybenzol-5-sulfonamid, -5-methylsulfonamid, -5-ethylsulfonamid, -5-propylsulfonamid, -5-butylsulfonamid, -5-isopropylsulfonamid, -5-(2-hydroxyethyl)-sulfonamid, -5-phenylsulfonamid, 5-N-methyl-N-phenylsulfonamid, -5-dimethylsulfonamid, -5-diethylsulfonamid, -5-bis(2-hydroxyethyl)sulfonamid, -5-methylsulfonyl, -5-ethylsulfonylsulfon, -5-propylsufonyl, -5-butylsulfonyl, -5-(2-hydroxyethyl)sulfonyl und -5-phenoxysulfonyl, 4-Chlor-2-amino-1-hydroxybenzol, 4-Chlor-6-nitro-2-amino-1-hydroxybenzol und 5-Nitro-2-amino-1-hydroxybenzol.

Beispiele von Pyrzolonen der Formel (IX) sind 1-Phenyl-3-methyl-5-pyrazolon, 1,3-Diphenyl-5-pyrazolon, 1-Phenyl-3-aminocarbonyl-5-pyrazolon, 1-Phenyl-3-cyano-5-pyrazolon, 1-Phenyl-3-carboxy-5-pyrazolon, 1-(2-, 3-oder 4-Chlorphenyl)-3-methyl-5-pyrazolon, 1-(2-, 3- oder 4-Methylphenyl)-3-methyl-5-pyrazolon, 1-(2-, 3- oder 4-Ethylphenyl)-3-methyl-5-pyrazolon, 1-(2-, 3- oder 4-Nitrophenyl)-3-methyl-5-pyrazolon, 1-(2-, 3- oder 4-Methoxyphenyl)-3-methyl-5-pyrazolon, 1-(3- oder 4-aminocarbonylphenyl)-3-methyl-5-pyrazolon, 1-(3- oder 4-dimethylaminocarbonylphenyl)-3-methyl-5-pyrazolon, 1-(2,5-Dichlorphenyl)-3-methyl-5-pyrazolon,

1-(2-Chlor-6-methylphenyl)-3-methyl-5-pyrazolon, 1-(2-Methoxy-5-methylphenyl)-3-methyl-5-pyrazolon, 1-(2-Methyl-4- oder -5-chlorphenyl)-3-methyl-5-pyrazolon und 1-(3-Chlor-4-methylphenyl)-3-methyl-5-pyrazolon.

Beispiele von Pyrazolonen der Formel (XI) sind die unter Formel (IX) aufgeführten Pyrazolone mit Ausnahme derjenigen, welche im 1-Phenyl-Rest durch Alkoxy, $NO_2$ oder Carbamoyl substituiert sind, ferner 1-(3- oder 4-Aminosulfonylphenyl)-3-methyl-5-pyrazolon, 1-(3- oder 4-Dimethylaminosulfonylphenyl)-3-methyl-5-pyrazolon, 1-(3- oder 4-Hydroxyethylaminosulfonylphenyl)-3-methyl-5-pyrazolon, 1-(3- oder 4-Methylsulfonylphenyl)-3-methyl-5-pyrazolon, 1-(3- oder 4-Ethylsulfonylphenyl)-3-methyl-5-pyrazolon, 1-(3- oder 4-Hydroxyethylsulfonylphenyl)-3-methyl-5-pyrazolon und 1-(3- oder 4-Phenoxysulfonylphenyl)-3-methyl-5-pyrazolon.

Am Ende der Synthese liegen die erfindungsgemäßen 1:2-Chromkomplexfarbstoffe der Formel (I) - gegebenenfalls in Begleitung ihrer symmetrischen 1:2-Chromkomplexfarbstoffe der Formel (VI) und (VII) - als Salz der Komplexsäure und der an ihr gebundenen $SO_3H$-Gruppe mit den oben erwähnten Säureacceptoren vor, beispielsweise als Alkalisalze bei Verwendung von Alkalihydroxiden oder -carbonaten oder als Ammoniumsalze bei Verwendung von Ammoniak, Aminen oder Tetraalkylammoniumhydroxiden. Zur Neutralisation können auch langkettige hydrophobe Amine Verwendung finden, die mit 1:2-Chromkomplexfarbstoffen in Wasser schwer lösliche Salze bilden, so daß sie nur durch Zusatz von organischen Lösungsmitteln oder in diesen Lösungsmitteln allein gelöst werden können. Derartige Amine sind beispielsweise N-Ethyl-N-hexylamin, Dodecylamin, Oleylamin, Cyclohexylamin, N,N'-Diphenylguanidin oder N,N'-Ditolylguanidin.

Die so hergestellten 1:2-Metallkomplexfarbstoffe können durch Aussalzen mit Alkalisalzen, Eindampfen auf der Walze oder Sprühtrocknung isoliert und mit den üblichen Hilfs- und Stellmitteln zu wasserlöslichen Präparationen verarbeitet werden.

Die Zubereitung zu flüssigen Präparationen unter Verwendung von organischen Lösungsmitteln gegebenenfalls im Gemisch mit Wasser und gegebenenfalls unter Zusatz von Lösungsvermittlern, wie beispielsweise Harnstoff, ist ebenfalls möglich und insofern empfehlenswert, als man die Synthese der 1:2-Methallkomplexfarbstoffe oder zumindestens den letzten Schritt dieser Synthese und die Herstellung der Farbstofflösungen in einem Topf ohne Zwischenisolierung vollziehen kann. Besonders vorteilhaft ist das Verfahren der DE-OS 2 443 483, bei dem man u. a. 1:2-Chromkomplexfarbstoffe in Gegenwart von alkalisch wirkenden Lithiumsalzen herstellt und dabei gleichzeitig lagerstabile konzentrierte Farbstofflösungen erhält.

Die 1:2-Chromkomplexfarbstoffe der Formel (I), gegebenenfalls begleitet von ihren symmetrischen 1:2-Chromkomplexfarbstoffen der Formel (VI) und (VII), die in Form der obengenannten hydrophoben Amine in organischen Lösungsmitteln gut löslich sind, können zum Färben von organischen Flüssigkeiten, Harzen oder Lacken, von Holzbeizen, Kugelschreiberpasten oder Tinten verwendet werden.

Die 1:2-Chromkomplexfarbstoffe der Formel (I), gegebenenfalls begleitet von ihren symmetrischen 1:2-Chromkomplexfarbstoffen der Formel (VI) und (VII), die aufgrund ihres Kations gut wasserlöslich sind, eignen sich zum Färben und Bedrucken der verschiedensten Stoffe, vor allem zum Färben von natürlichen und synthetischen amidgruppenhaltigen Materialien, wie Wolle, Seide, Leder, Polyamid- und Polyurethanfaser. Sie werden bevorzugt in schwach saurem bis schwach alkalischem Bad, insbesondere in essigsaurem Bad, eingesetzt, wo sie gleichmäßig auf das Substrat aufziehen und licht- und gebrauchsechte Färbungen liefern.

Die 1:2-Chromkomplexfarbstoffe der Formel (I) und besonders ihre Gemische mit den symmetrischen Spezies der Formel (VI) und (VII) lassen sich besonders vorteilhaft zum Färben und Imprägnieren von Leder verwenden. Auf Lederfabrikaten unterschiedlicher Farbstoffaffinität, wie Chromleder, verschieden nachgegerbte Leder oder Veloursleder vom Rind oder Schwein, ziehen sie gut auf. In der Farbtiefe bauen sie ebenfalls gut auf und geben kräftige gelbstichig rote bis blaustichig rote Färbungen. Bei Sättigung der Leder sind keine Bronzierungseffekte zu befürchten.

Die flüssigen Zubereitungen der erfindungsgemäßen Farbstoffe der Formel (I) und insbesondere der Gemische von diesen mit den symmetrischen Chromkomplexen der Formel (VI) und (VII) eignen sich sowohl zum Faßfärben als auch zum Besprühen und Imprägnieren von Leder. Beim Färben auf Durchlauf-Maschinen beispielsweise vom Typ ®MULTIMA zeichnen sie sich durch eine gute Penetration und eine gute Bindung zum Substrat aus.

Aus FR-A 2 262 687 sind 1:2 Chromkomplexfarbstoffe bekannt, deren eine Farbstoffkomponente an der Phenylgruppe in meta-Stellung zur Azobrücke einen Sulfonamidrest trägt.

Beispiel 1

0,1 Mol Chrom-1:1-Komplex des Farbstoffes aus diazotierter 6-Nitro-2-amino-1-hydroxybenzol-4-sulfonsäure und 1-(4-Methylphenyl)-3-methyl-5-pyrazolon und 0,1 Mol Kupplungsprodukt aus diazotiertem 4-Chlor-2-amino-1-hydroxybenzol und 1-(Phenyl-3-sulfonamid)-3-methyl-5-pyrazolon werden in 800 ml Wasser miteinander verrührt und innerhalb von 30 Minuten auf 85° C erwärmt. Gleichzeitig hält man den pH durch Zutropfen von ingesamt ca. 45 ml 5 n Natronlauge bei 7,5 - 8,5. Die nach Erreichen von 85° C sich rasch bildende Lösung wird bei gleicher Temperatur und im gleichen pH-Bereich noch etwa eine Stunde gerührt, bis die beiden Ausgangsfarbstoffe vollständig zum 1:2-Chrommischkomplex der Formel

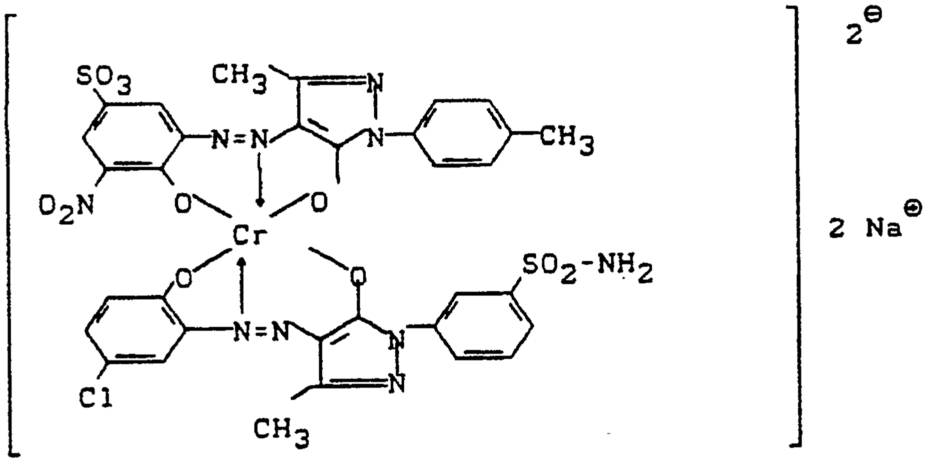

zusammengetreten sind. Das Reaktionsprodukt wird durch Aussalzen mit Natriumchlorid und Filtration isoliert und getrocknet. Es stellt ein rotbraunes Pulver dar, welches Wolle, Polyamid und Leder in lichtechten roten Tönen färbt.

Beispiel 2

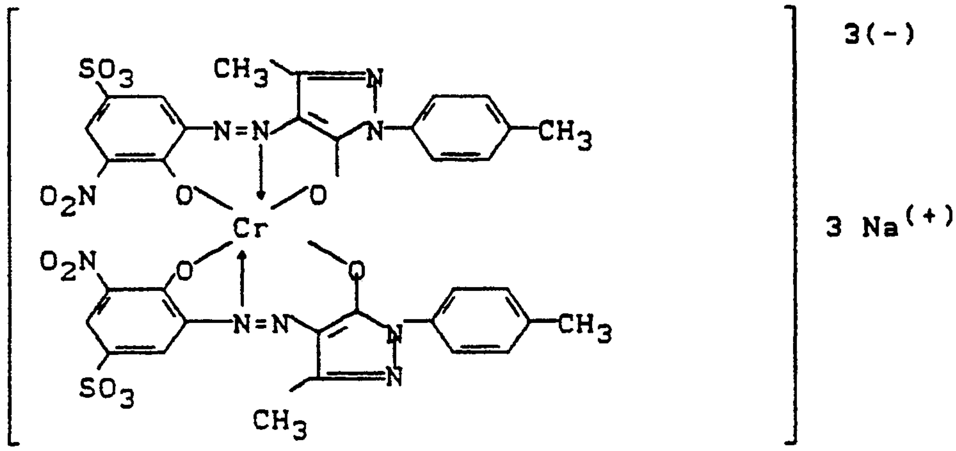

+

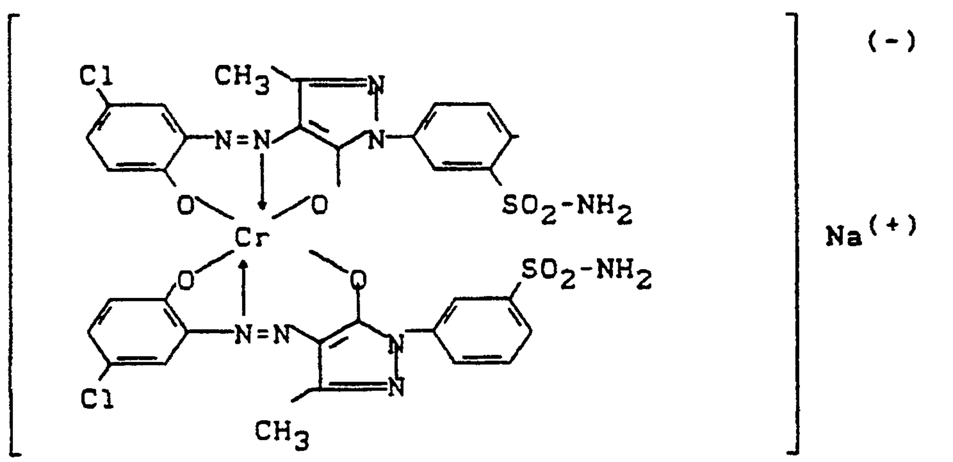

+

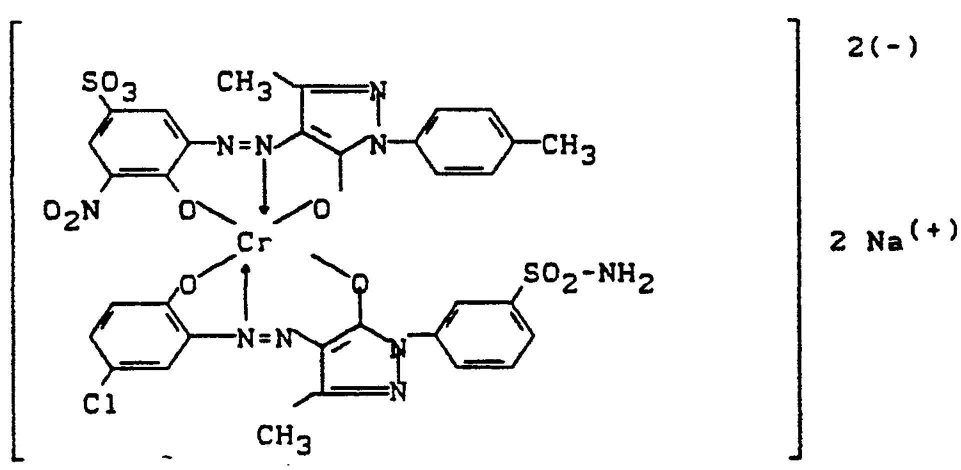

Je 0,1 Mol der beiden Kupplungsprodukte aus diazotierter 6-Nitro-2-amino-1-hydroxybenzol-4-sulfonsäure und 1-(4-Methylphenyl)-3-methyl-5-pyrazolon und aus diazotiertem 4-Chlor-2-amino-1-hydroxybenzol und 1-(Phenyl-3-sulfonamid)-3-methyl-5-pyrazolon werden zusammen mit 250 ml Natriumchromsalicylat-Lösung (entsprechend 5,2 g Chrom) in 600 ml Wasser verrührt und unter Rückfluß gekocht. Nach etwa zwei Stunden sind im Chromatogramm keine Ausgangsfarbstoffe mehr zu sehen. Die Lösung der gebildeten chromhaltigen Farbstoffe wird durch Eindunsten vom Wasser befreit. Der Rückstand ist ein rotbraunes

Pulver, welches in Leder gut penetriert und lichtechte rote Färbungen liefert.

Beispiel 3

0,1 Mol Chrom-1:1-Komplex des Farbstoffes aus diazotierter 6-Nitro-2-amino-1-hydroxybenzol-4-sulfonsäure und 1-(4-Methylphenyl)-3-methyl-5-pyrazolon und 0,1 Mol Kupplungsprodukt aus diazotiertem 2-Amino-1-hyroxybenzol-5-dimethylsulfonamid und 1-Phenyl-3-methyl-5-pyrazolon werden in 800 ml Wasser bei 85 °C und pH 7,5 - 8,5 miteinander umgesetzt. Der pH wird während der Reaktion durch Zutropfen von etwa 45 ml 5 n Natronlauge auf der gewünschten Höhe gehalten. Nach 90 Minuten sind keine Ausgangsstoffe mehr nachzuweisen. Der gebildete Chrommisch-Komplex der Formel

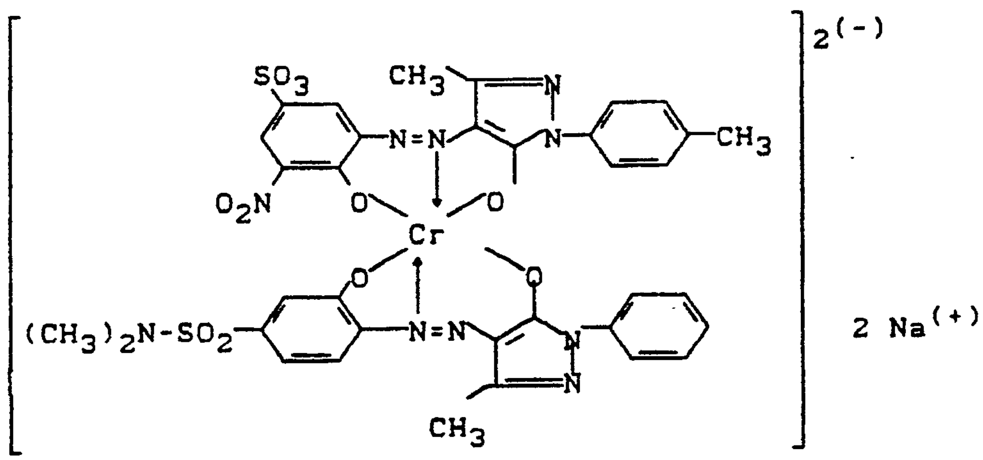

wird durch Zusatz von Kochsalz gefällt, abgesaugt und getrocknet. Man erhält ein rotbraunes Pulver, mit dem man auf Wolle, Polyamid und Leder lichtechte rote Färbungen erzielen kann.

Beispiel 4

Je 0,1 Mol der beiden Kupplungsprodukte aus diazotierter 6-Nitro-2-amino-1-hydroxybenzol-4-sulfonsäure und 1-(4-Methylphenyl)-3-methyl-5-pyrazolon und aus diazotiertem 2-Amino-1-hydroxybenzol-5-dimethylsulfonamid und 1-(Phenyl-3-sulfonamid)-3-methyl-5-pyrazolon werden als feuchte Preßkuchen in 350 ml 1-Ethoxy-2-propanol zu einer homogenen Suspension verrührt. Man trägt 0,1 Mol basisches Chromacetat ein, erwärmt das Gemisch innerhalb von 45 Minuten auf 100 °C und fügt während des Aufheizens in möglichst gleichmäßgen Portionen insgesamt 10,5 g $LiOH.H_2O$ zu. Die bei 100 °C rasch entstehende Lösung wird noch zwei Stunden bei dieser Temperatur gerührt, bis die beiden Ausgangsfarbstoffe vollständig chromiert sind.

Nach Abkühlen auf Raumtemperatur wird geklärt. Man erhält eine konzentrierte, tiefrote lagerstabile Lösung des chromhaltigen Farbstoffgemisches der Formel

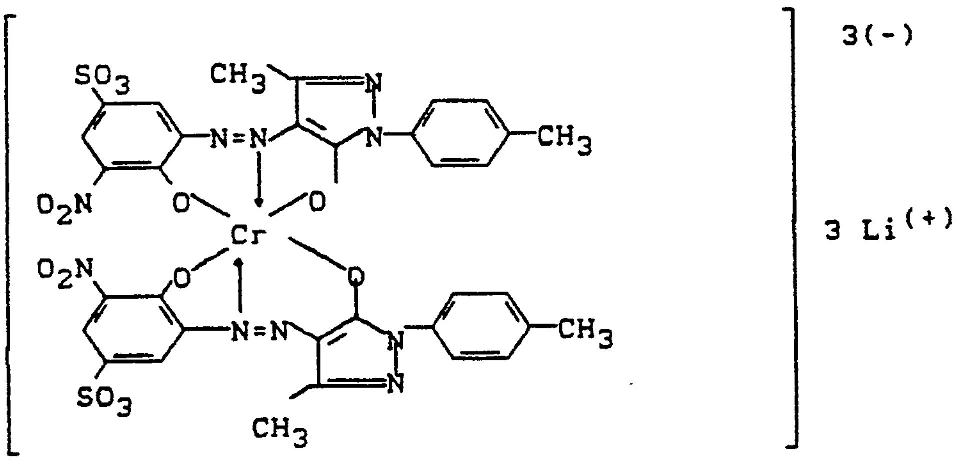

+

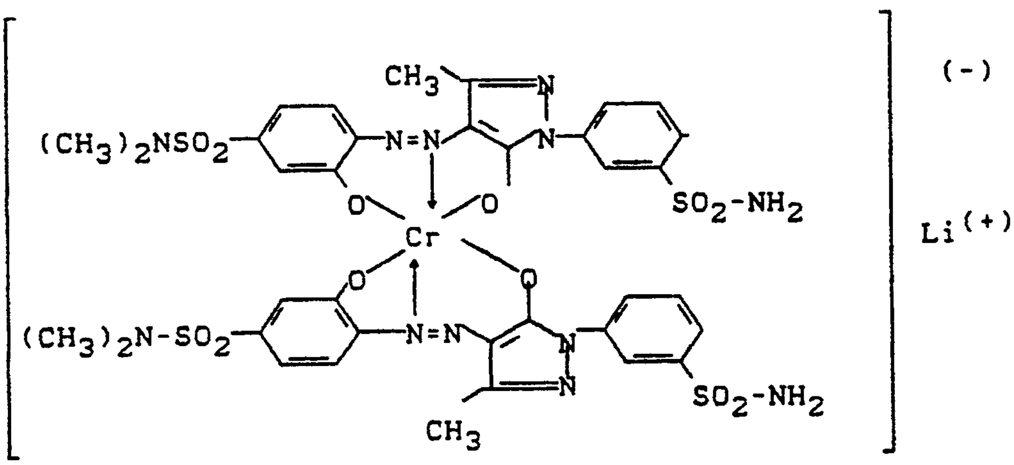

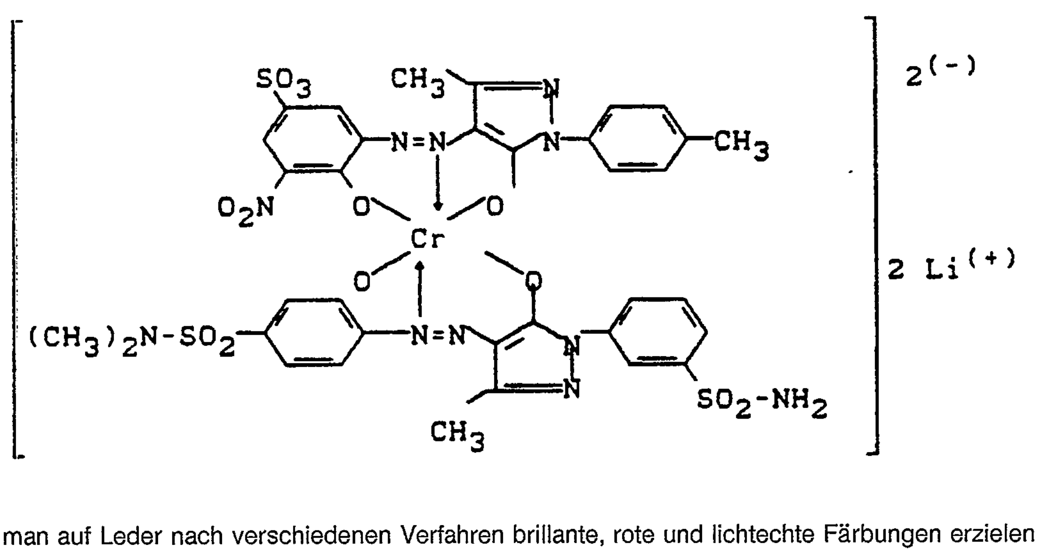

mit der man auf Leder nach verschiedenen Verfahren brillante, rote und lichtechte Färbungen erzielen kann.

Beispiele 5 bis 26

Nach den in den Beispielen 1 bis 4 angegebenen Verfahren erhält man weitere wertvolle chromhaltige Farbstoffe, wenn man von den Farbstoffpaaren (1) und (2) der folgenden Tabelle ausgeht. Die flüssigen oder festen Präparationen geben auf Wolle, Polyamid und Leder Färbungen in den Nuancen von gelbstichig

Rot bis blaustichig Rot.

**Tabelle**

| Nr. | Farbstoff (1) | Farbstoff (2) |
|---|---|---|
| 5 | 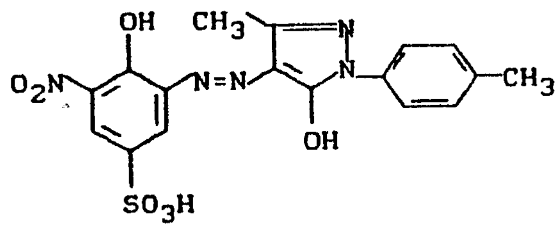 | 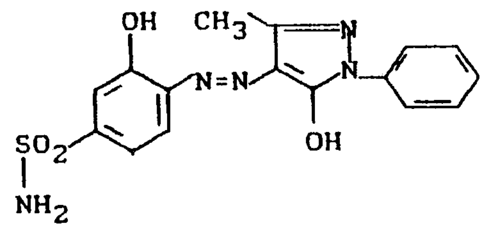 |
| 6 | 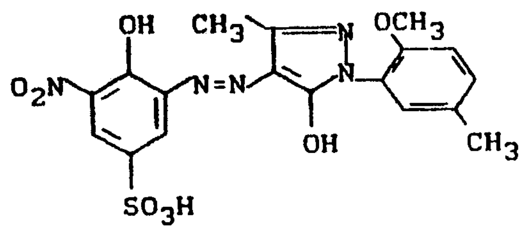 | 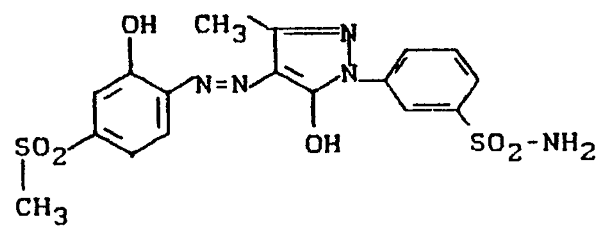 |
| 7 | 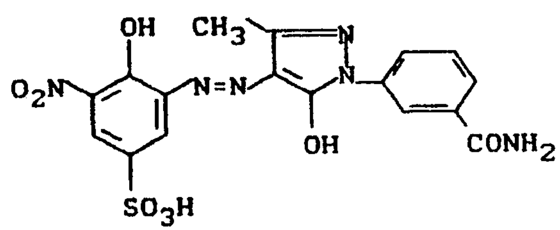 | 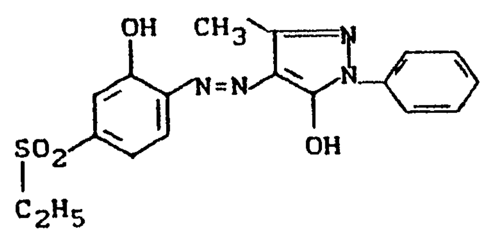 |

<u>Tabelle</u> (Fortsetzung)

| Nr. | Farbstoff (1) | Farbstoff (2) |
|---|---|---|
| 8 | 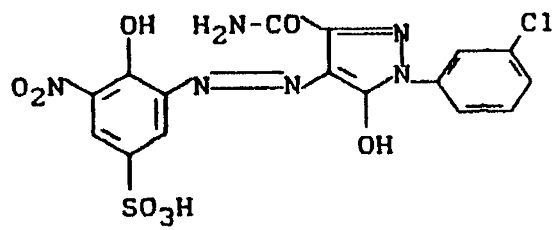 | 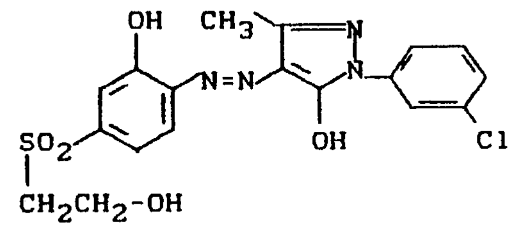 |
| 9 | 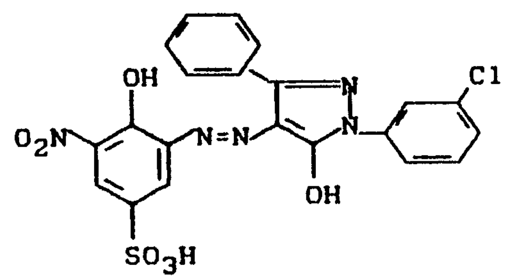 | 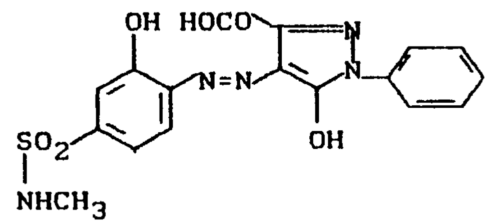 |
| 10 | 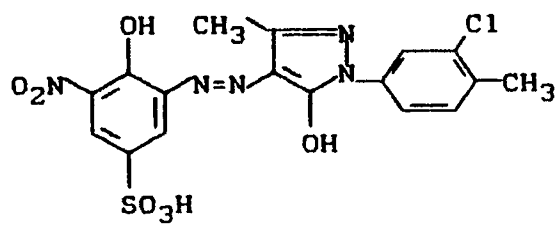 | 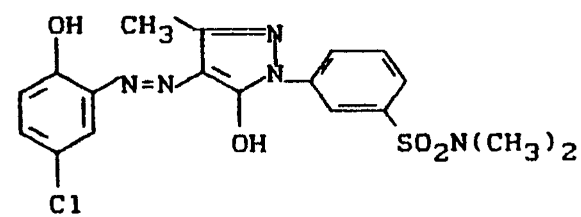 |

Tabelle (Fortsetzung)

| Nr. | Farbstoff (1) | Farbstoff (2) |
|---|---|---|
| 11 | 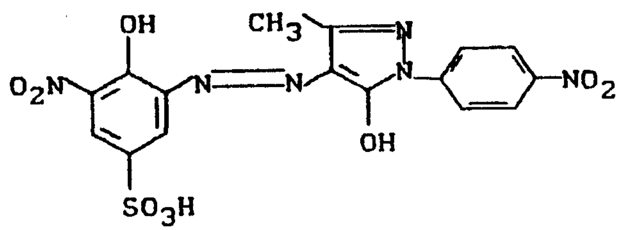 | 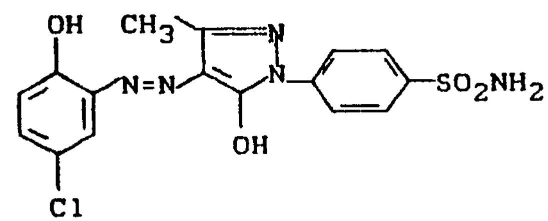 |
| 12 | 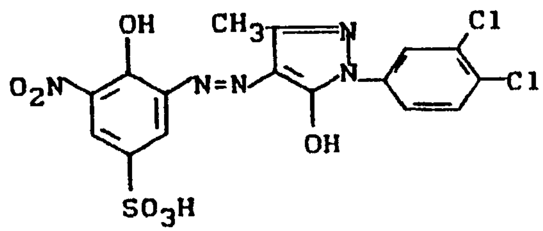 | 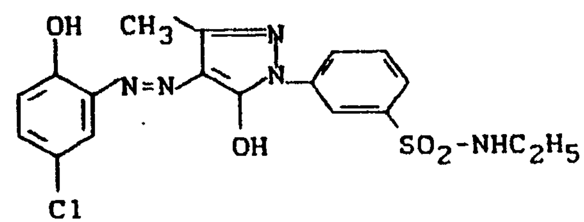 |
| 13 | 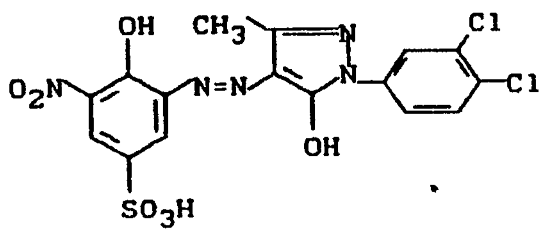 | 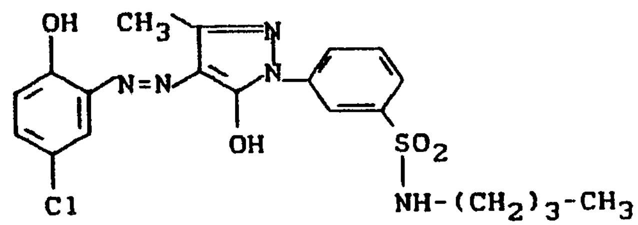 |

<u>Tabelle</u> (Fortsetzung)

| Nr. | Farbstoff (1) | Farbstoff (2) |
|---|---|---|
| 14 | 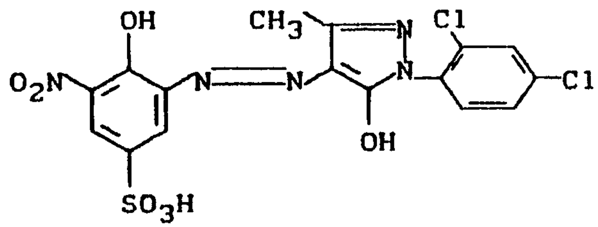 | 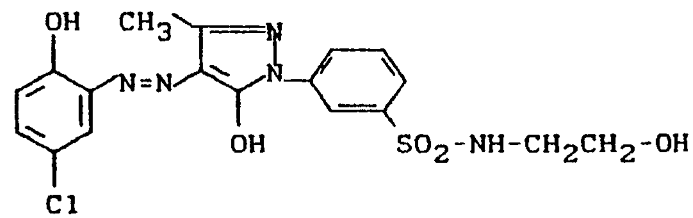 |
| 15 | 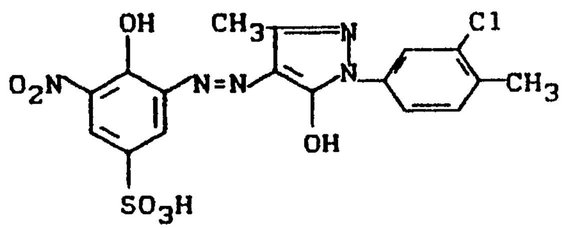 | 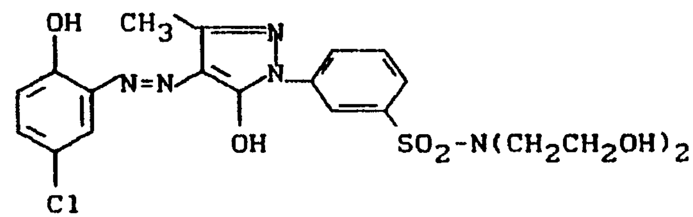 |
| 16 | 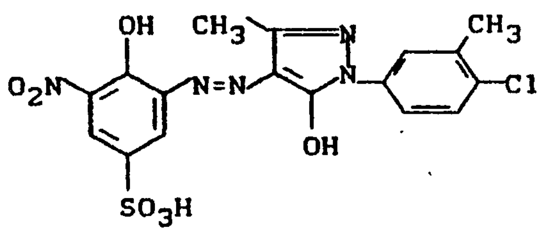 | 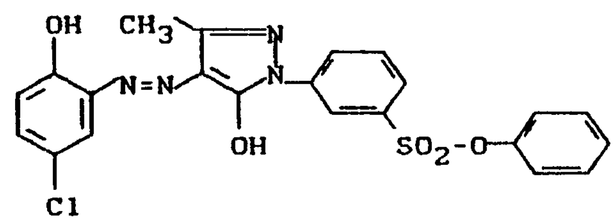 |

**Tabelle** (Fortsetzung)

| Nr. | Farbstoff (1) | Farbstoff (2) |
|---|---|---|
| 17 | 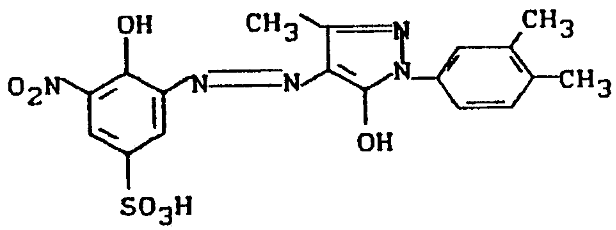 | 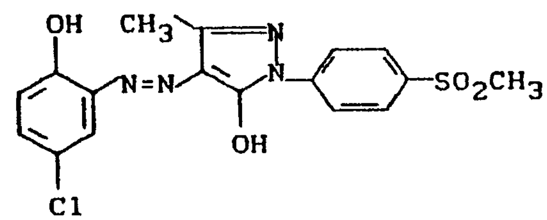 |
| 18 | 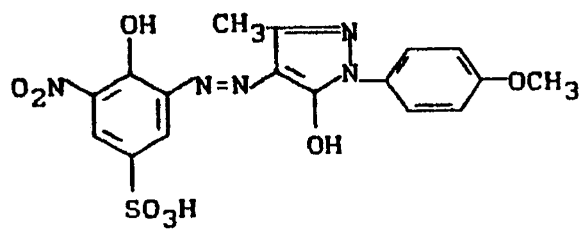 | 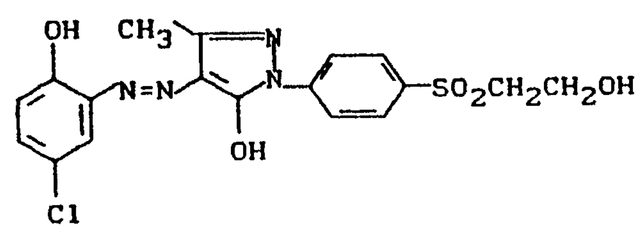 |
| 19 | 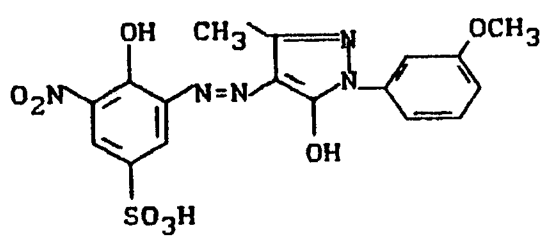 | 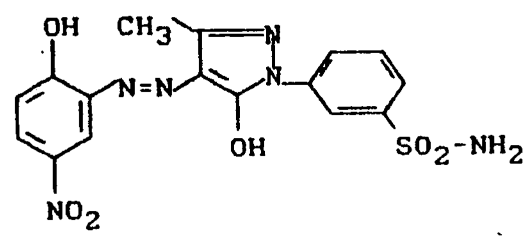 |

<u>Tabelle</u> (Fortsetzung)

| Nr. | Farbstoff (1) | Farbstoff (2) |
|---|---|---|
| 20 | 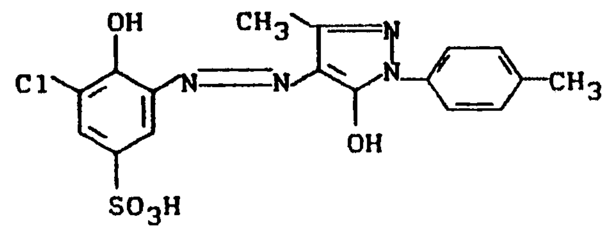 | 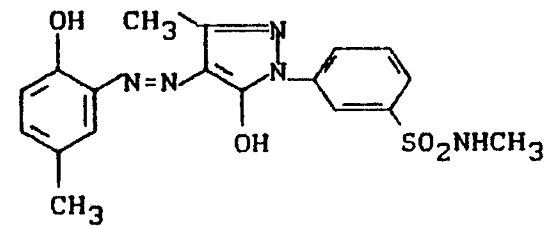 |
| 21 | 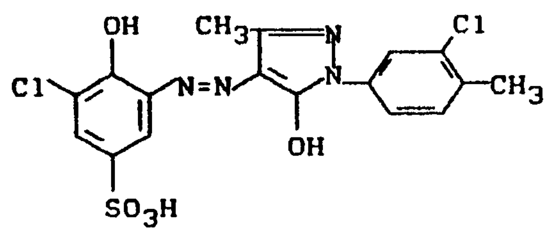 | 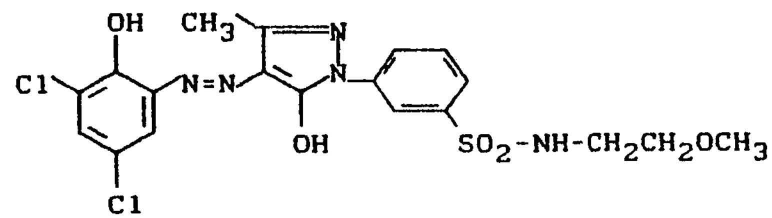 |
| 22 | 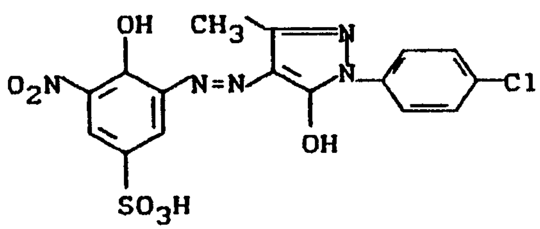 | 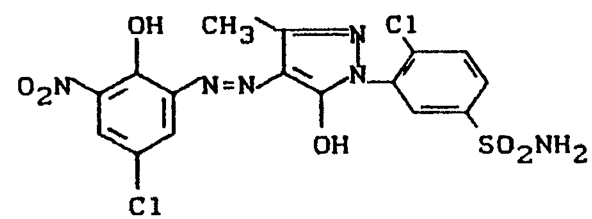 |

<u>Tabelle</u> (Fortsetzung)

| Nr. | Farbstoff (1) | Farbstoff (2) |
|---|---|---|
| 23 | 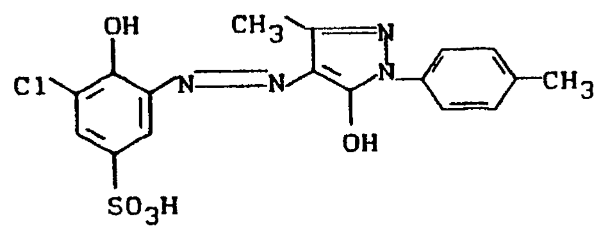 | 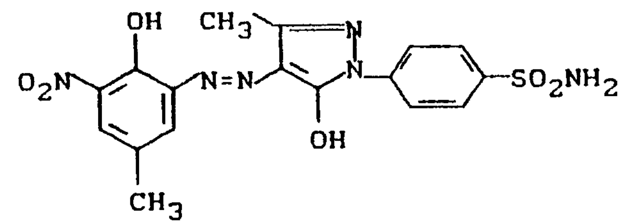 |
| 24 | 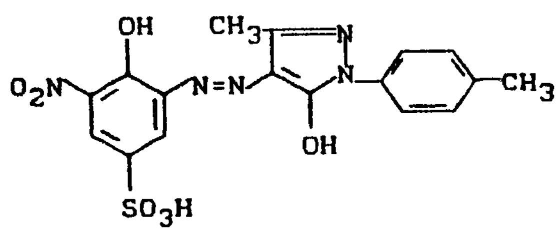 | 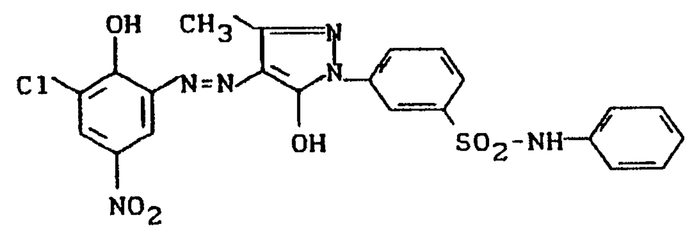 |
| 25 | 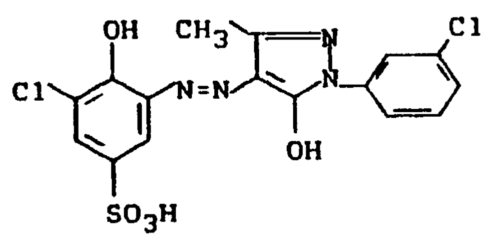 | 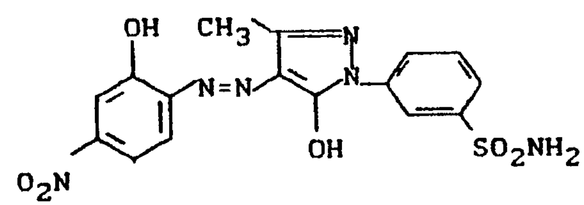 |

Tabelle (Fortsetzung)

| Nr. | Farbstoff (1) | Farbstoff (2) |
|---|---|---|
| 26 | 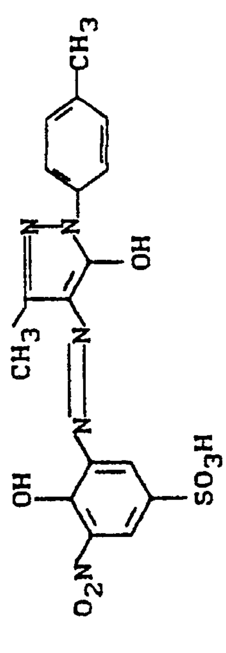 | 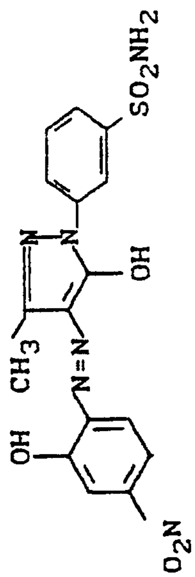 |

## Patentansprüche

1. Asymmetrische 1:2-Chromkomplexfarbstoffe der Formel

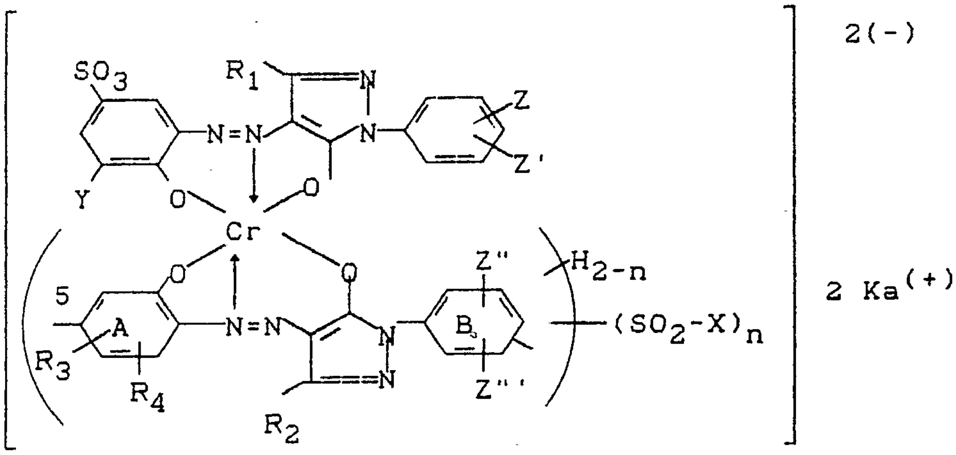

(I)

worin

| | |
|---|---|
| $H_{2-n}$ und $SO_2$-X | an Ring B oder Position 5 des Ringes A gebunden sind, und |
| $R_1$, $R_2$ | gegebenenfalls substituiertes Alkyl, gegebenenfalls substituiertes Aryl, COOH, gegebenenfalls durch Alkyl Aralkyl, Cycloalkyl oder Aryl mono-oder disubstituiertes Carbamoyl, CN oder Carbonsäureester, |
| X | gegebenenfalls durch Alkyl, Cycloalkyl, Aralkyl oder Aryl mono- oder disubstituiertes $NH_2$, Aryloxy oder Alkyl, |
| Y | $NO_2$ oder Cl, |
| Z | H, Cl oder gegebenenfalls substituiertes Alkyl, |
| Z, | Cl, gegebenenfalls substituiertes Alkyl, gegebenenfalls substituiertes Alkoxy, $NO_2$ oder gegebenenfalls durch Alkyl, Aryl, Cycloalkyl oder Aralkyl mono- oder disubstituiertes Carbamoyl, |
| Z'', Z''' | H, Cl oder gegebenenfalls substituiertes Alkyl, |
| n | 1 oder 2, |
| $Ka^{(+)}$ | ein Kation und |
| $R_3$, $R_4$ | H, $NO_2$, Cl, gegebenenfalls substituiertes Alkyl bedeutet. |

**2.** Farbstoffe des Anspruchs 1 der Formel

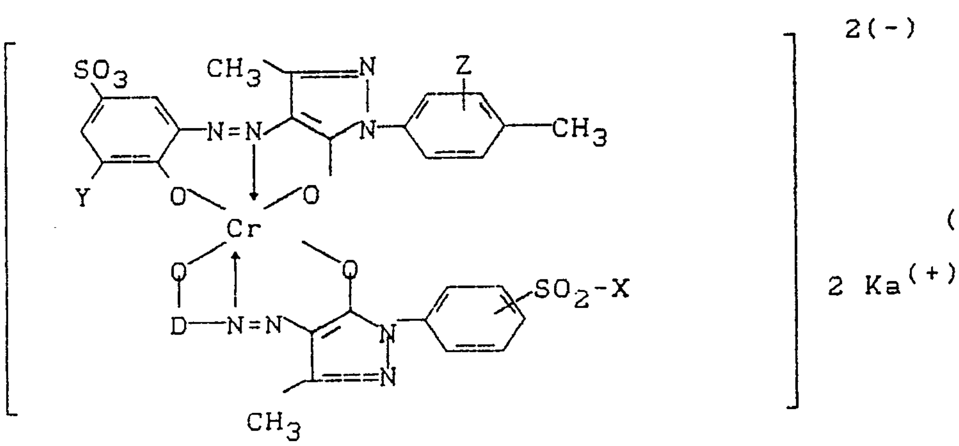

(II)

worin

D für den Rest des 4-Chlor-2-amino-1-hydroxybenzols, 4,6-Dichlor-2-amino-1-hydroxybenzols, 4-Chlor-6-nitro-2-amino-1-hydroxybenzols oder 5-Nitro-2-amino-1-hydroxybenzols steht.

**3.** Farbstoffe des Anspruchs 1 der Formel

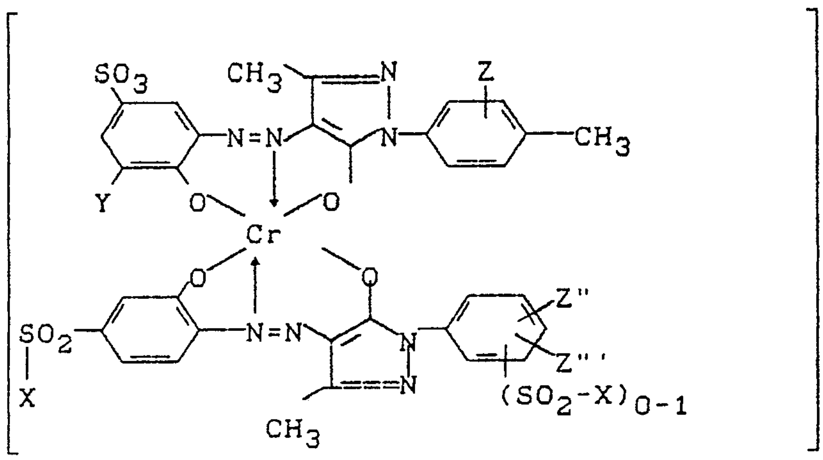

2(-)

(III)

2 $Ka^{(+)}$

4. Farbstoffe der Ansprüche 1 bis 3 mit

X = $NR_4R_5$ worin
$R_4$ = H, Alkyl und
$R_5$ = H, Alkyl oder Aryl bedeutet.

5. Farbstoffgemische, erhältlich durch Mischchromierung von Farbstofen der Formel

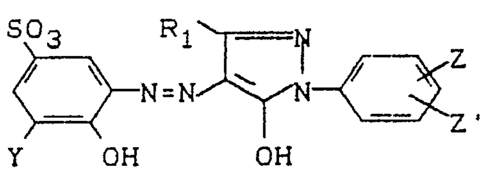

(IV)

worin

$R_1$ Alkyl, Aryl, COOH, gegebenenfalls durch Alkyl, Aralkyl, Cycloalkyl oder Aryl mono- oder disubstiutiertes Carbamoyl, CN oder Carbonsäureester,
Y $NO_2$ oder Cl,
Z H, Cl oder Alkyl,
Z, Cl, Alkyl, Alkoxy, $NO_2$ oder gegebenenfalls durch Alkyl, Aryl, Cycloalkyl oder Aralkyl mono- oder disubstituiertes Carbamoyl

und Farbstoffen der Formel

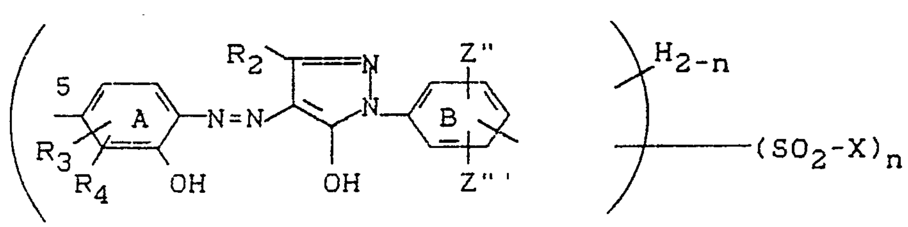

(V)

worin

$R_2$ Alkyl, Aryl, COOH, gegebenenfalls durch Alkyl, Aralkyl, Cycloalkyl oder Aryl mono- oder disubstiutiertes Carbamoyl, CN oder Carbonsäureester,

$R_3$, $R_4$ H, $NO_2$, Cl, Alkyl

| | |
|---|---|
| $H_{2-n}$ und $SO_2$-X | an Ring B oder Position 5 des Ringes A gebunden sind und Z", Z"' H, Cl oder Alkyl, |
| n | 1 oder 2 und |
| X | gegebenenfalls durch Alkyl, Cycloalkyl, Aralkyl oder Aryl mono- oder disubstituiertes $NH_2$, Aryloxy oder Alkyl bedeutet. |

6. Verwendung der Farbstoffe der Ansprüche 1-5 zum Färben und Bedrucken von natürlichen und synthetischen amidgruppenhaltigen Materialien.

## Claims

1. Asymmetric 1:2 chromium complex dyestuffs of formula

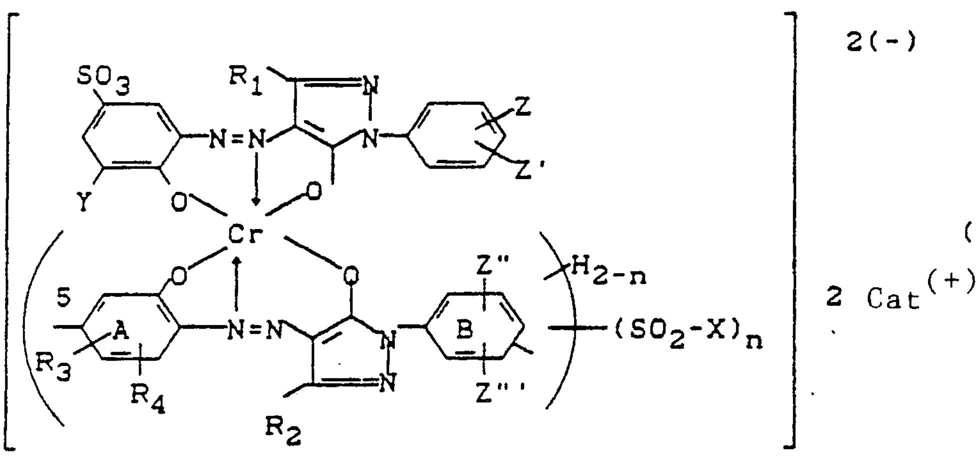

(I)

in which

| | |
|---|---|
| $H_{2-n}$ and $SO_2$-X | are bound to ring B or position 5 of ring A, and |
| $R_1$, $R_2$ | are substituted or unsubstituted alkyl, substituted or unsubstituted aryl, COOH, carbamoyl which is unsubstituted or mono- or disubstituted by alkyl, aralkyl, cycloalkyl or aryl, or are CN or carboxylic ester, |
| X | is $NH_2$ which is unsubstituted or mono-or disubstituted by alkyl, cycloalkyl, aralkyl or aryl, or is aryloxy or alkyl, |
| Y | is $N_2$ or Cl, |
| Z | is H, Cl or unsubstituted or substituted alkyl, |
| Z' | is Cl, substituted or unsubstituted alkyl, substituted or unsubstituted alkoxy, $NO_2$ or carbamoyl which is unsubstituted or mono- or disubstituted by alkyl, aryl, cycloalkyl or aralkyl, |
| Z", Z"' | are H, Cl or substituted or unsubstituted alkyl, |
| n | is 1 or 2, |
| $Cat^{(+)}$ | is a cation and |
| $R_3$, $R_4$ | are H, $N0_2$, Cl, substituted or unsubstituted alkyl. |

2. Dyestuffs of Claim 1 of the formula

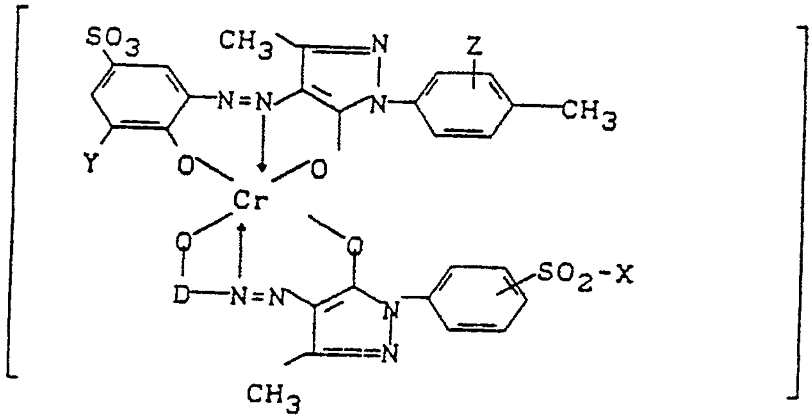

2(-)

(II)

2 Cat(+)

in which

D represents the radical of 4-chloro-2-amino-1-hydroxybenzene, 4,6-dichloro-2-amino-1-hydroxybenzene, 4-chloro-6nitro2-rnino1hydroxy benzene or 5-nitro-2-amino-1-hydroxybenzene.

3. Dyestuffs of Claim 1 of the formula

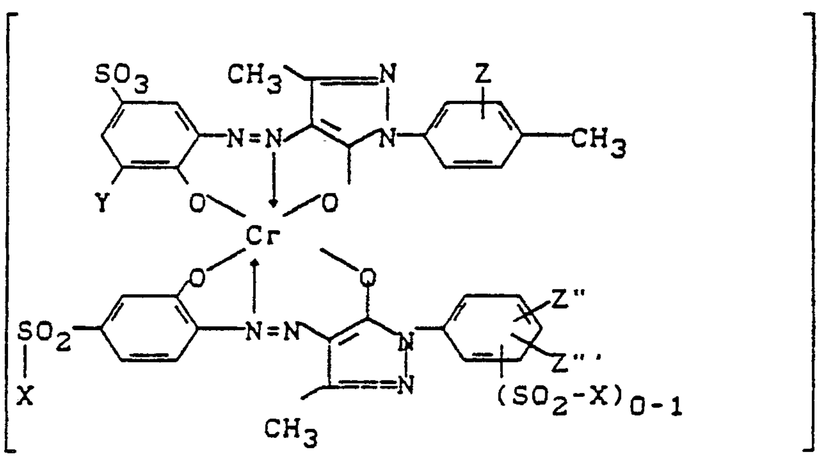

2(-)

(III)

2 Cat(+)

4. Dyestuffs of Claims 1 to 3 where

X is $NR_4R_5$, in which

$R_4$ is H, alkyl and

$R_5$ is H, alkyl or aryl.

5. Dyestuff mixtures obtainable by mixchroming of dyestuffs of the formula

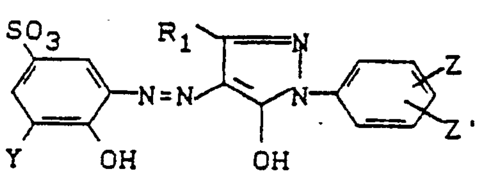

(IV)

in which

$R_1$ is alkyl, aryl, COOH, carbamoyl which is unsubstituted or mono- or disubstituted by alkyl, aralkyl, cycloalkyl or aryl, or is CN or carboxylic ester,

Y is $NO_2$ or Cl,
Z is H, Cl or alkyl,
Z' is Cl, alkyl, alkoxy, $NO_2$ or carbamoyl which is unsubstituted or mono- or disubstituted by alkyl, aryl, cycloalkyl or aralkyl

and dyestuffs of the formula

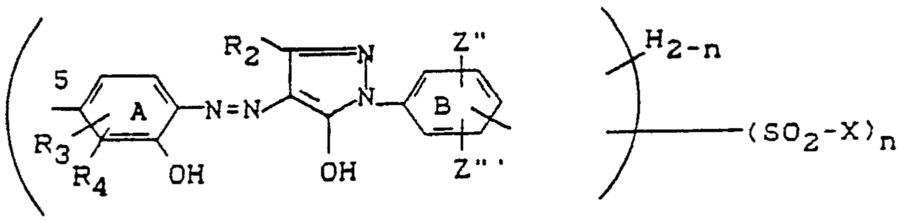

(V)

in which

$R_2$ is alkyl, aryl, COOH, carbamoyl which is unsubstituted or mono- or disubstituted by alkyl, aralkyl, cycloalkyl or aryl, or is CN or carboxylic ester,

$R_3$, $R_4$ are H, $NO_2$, Cl, alkyl,

$H_{2-n}$ and $SO_2$-X are bound to ring B or position 5 of ring A, and Z", Z"' are H, Cl or alkyl,
n is 1 or 2 and
X is $NH_1$ which is unsubstituted or mono- or disubstituted by alkyl, cycloalkyl, aralkyl or aryl, or is aryloxy or alkyl.

6. Use of the dyestuffs of Claims 1-5 for the dyeing and printing of natural and synthetic amido-containing materials.

**Revendications**

1. Colorants complexes de chrome 1:2 asymétriques de formule

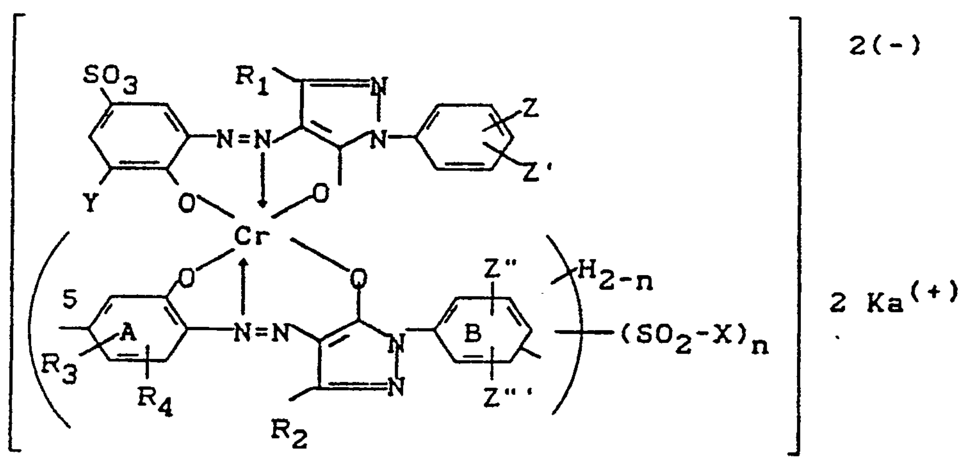

(I)

dans laquelle
$H_{2-n}$ et $SO_{2-X}$ sont liés au noyau B ou en position 5 du noyau A et
$R_1$, $R_2$ représentent un groupe alkyle éventuellement substitué, aryle éventuellement substitué, COOH, un groupe carbamoyle éventuellement mono-substitué ou disubstitué par un radical alkyle, aralkyle, cycloalkyle ou aryle, ou représentent un groupe CN ou ester d'acide carboxylique,

| | |
|---|---|
| X | est un groupe $NH_2$ éventuellement mono-substitué ou disubstitué par un radical alkyle, cycloalkyle, aralkyle ou aryle, ou est un groupe aryloxy ou alkyle, |
| Y | représente un groupe $NO_2$ ou Cl, |
| Z | représente H, Cl ou un groupe alkyle éventuellement substitué, |
| Z' | représente Cl, un groupe alkyle éventuellement substitué, alkoxy éventuellement substitué, $N0_2$ ou carbamoyle éventuellement monosubstitué ou disubstitué par un radical alkyle, aryle ou cycloalkyle, |
| Z", Z"' | représentent H, Cl ou un groupe alkyle éventuellement substitué, |
| n | a la valeur 1 ou 2, |
| $Ka^{(+)}$ | est un cation et |
| $R_3$, $R_4$ | représentent H, $NO_2$, Cl ou un groupe alkyle éventuellement substitué |

**2.** Colorants suivant la revendication 1 de formule

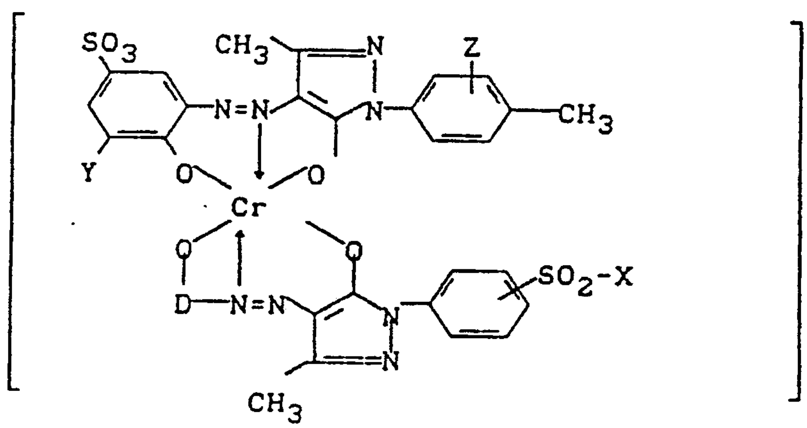

$2(-)$

(II)

$2\ Ka^{(+)}$

dans laquelle

D est le reste du 4-chloro-2-amino-1-hydroxybenzène, du 4,6-dichloro-2-amino-1-hydroxybenzène, du 4-chloro-6-nitro-2-amino-1-hydroxybenzène ou du 5-nitro-2-amino-1-hydroxybenzène.

**3.** Colorants suivant la revendication 1, de formule

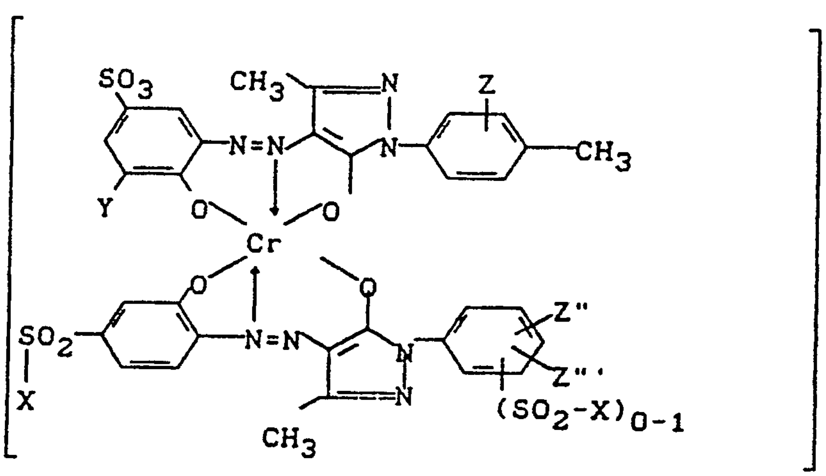

$2(-)$

(III)

$2\ Ka^{(+)}$

**4.** Colorants suivant les revendications 1 à 3, dans lesquelles

| | |
|---|---|
| X | représente $NR_4R_5$ où |
| $R_4$ | représente H, un groupe alkyle et |
| $R_5$ | représente H, un groupe alkyle ou aryle. |

**5.** Mélanges de colorants, obtenus par combinaison au chrome de colorants de formule

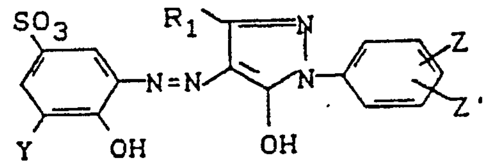

(IV)

dans laquelle

- $R_1$ est un groupe alkyle, aryle, COOH, carbamoyle portant éventuellement un ou deux substituants alkyle, aralkyle, cycloalkyle ou aryle, ou est un groupe CN ou ester d'acide carboxylique,
- Y représente $NO_2$ ou Cl,
- Z représente H, Cl ou un groupe alkyle,
- Z' représente Cl, un groupe alkyle, alkoxy, $NO_2$ ou un groupe carbamoyle portant éventuellement un ou deux substituants alkyle, aryle, cycloalkyle ou aralkyle

et de colorants de formule

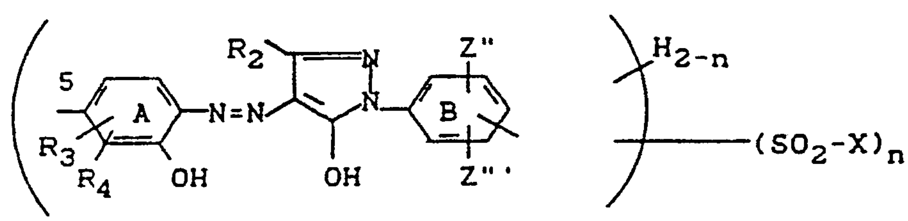

(V)

dans laquelle

- $R_2$ est un groupe alkyle, aryle, COOH, carbamoyle portant éventuellement un ou deux substituants alkyle, aralkyle, cycloalkyle ou aryle, ou est un groupe CN ou ester d'acide carboxylique,
- $R_3$ $R_4$, représentent H, $NO_2$, Cl, ou un groupe alkyle
- $H_{2-n}$ et $SO_{2-x}$ sont liés au noyau B ou dans la position 5 du noyau A et Z"' et Z"' représentent H, Cl ou un groupe alkyle,
- n a la valeur 1 ou 2 et
- X est un groupe $NH_2$ portant éventuellement un ou deux substituants alkyle, cycloalkyle, aralkyle ou aryle, ou est un groupe aryloxy ou un groupe alkyle.

**6.** Utilisation des colorants des revendications 1 à 5 pour la teinture et l'impression de matières naturelles et synthétiques portant des groupes amide.